# EUROPÄISCHE PATENTSCHRIFT

(11) **EP 1 500 845 B1**
(45) Veröffentlichungstag und Bekanntmachung des Hinweises auf die Patenterteilung: **23.04.2008**
(21) Anmeldenummer: 04090296.7
(22) Anmeldetag: 24.07.2004
(51) Int. Cl.: F16F 9/46

(54) **Stossdämpfer mit veränderbarer Dämpfungscharakteristik**
Shock absorber with variable damping characteristics
Amortisseur de chocs à caractéristiques d'amortissement variables

(30) Priorität: 24.07.2003 EP 03090230
(43) Veröffentlichungstag der Anmeldung: 26.01.2005
(73) Patentinhaber: Bäringhaus & Hunger GmbH, 09579 Grünhainichen (DE)
(72) Erfinder: Neumann, Helmut, 21509 Glinde (DE)
(74) Vertreter: Wenzel & Kalkoff

(56) Entgegenhaltungen:
- EP-A- 0 392 284
- EP-A- 1 106 403
- DE-A- 3 832 625

## Beschreibung

### Beschreibung

Die Erfindung betrifft einen Stoßdämpfer mit veränderbarer Dämpfungscharakteristik, insbesondere für Kraftfahrzeuge, im wesentlichen umfassend ein mit einem Dämpfungsmedium gefülltes Stoßdämpferrohr, eine Kolbenstange, die abgedichtet in das Stoßdämpferrohr eintaucht, einen Kolben, der an einem freien Ende der Kolbenstange an dieser derart angeordnet ist, daß der Kolben gegen das Stoßdämpferrohr abgedichtet ist und den Raum innerhalb des Stoßdämpferrohrs in zwei Kammern teilt, wobei die Kammern durch einen Hauptstromkanal sowie mehrere Nebenstromkanäle miteinander verbunden sind, und eine Ventileinrichtung zum Öffnen und Schließen der Nebenstromkanäle, wobei die Ventileinrichtung hierzu mehrere auf einem Grundkörper verschiebbare und separat steuerbare Steuerschieber sowie mehrere Ventilelemente mit unterschiedlichen Strömungscharakteristika aufweist.

Bekannte Stoßdämpfer der genannten Art mit veränderbarer Dämpfungscharakteristik, wie sie beispielsweise aus der EP 0 392 284 A2 bekannt sind, weisen eine Ventileinrichtung auf, die zwei schaltbare Nebenstromkanäle aufweist. Innerhalb der Nebenstromkanäle sind zwei Ventilelemente angeordnet. Ein erstes Ventilelement mit einem Ventilkörper ist einem ersten Nebenstromkanal direkt zugeordnet. Das zweite Ventilelement, das ebenfalls aus einem Ventilkörper besteht, ist zentral angeordnet. Dadurch ist das zweite Ventilelement sowohl dem ersten Nebenstromkanal als auch dem zweiten Nebenstromkanal zugeordnet. Das bedeutet, daß das Dämpfungsmedium für den Fall, daß es bei geöffnetem Steuerschieber durch den zweiten Nebenstromkanal strömt, ein einzelnes Ventilelement, nämlich das zentral gelegene und beiden Nebenstromkanälen gemeinsam zugeordnete Ventilelement, überwinden muß. Strömt das Dämpfungsmedium bei entsprechend geöffnetem Steuerschieber dagegen durch den ersten Nebenstromkanal, muß es zwei Ventilelemente überwinden, nämlich zum einen das direkt zugeordnete erste Ventilelement und zum anderen das zweite zentrale Ventilelement. Der bekannte Stoßdämpfer weist mit anderen Worten drei verschiedene Dämpfungsstellungen auf, wobei die Dämpfungscharakteristika der Nebenstromkanäle wegen des gemeinsamen Ventilelementes voneinander abhängen.

In einer ersten Dämpfungsstellung sind beide Nebenstromkanäle durch die Steuerschieber geschlossen, so daß das Dämpfungsmedium durch den Hauptstromkanal strömen muß. Die Dämpfungscharakteristik des Hauptstromkanals ist jedoch üblicherweise sehr hart. Ist der erste Nebenstromkanal in geöffneter Stellung, sorgen die in Reihe angeordneten zwei Ventilelemente, die in dem ersten Nebenstromkanal angeordnet sind und insgesamt einen gegenüber dem Hauptstromkanal geringeren Widerstand, also eine weicher Strömungscharakteristik aufweisen, für eine weichere Dämpfungscharakteristik. Für den Fall, daß der zweite Nebenstromkanal in geöffneter Position ist, wählt das Dämpfungsmedium nach dem Prinzip des geringsten Widerstandes den Weg über das Ventilelement des zweiten Nebenstromkanals, da innerhalb des zweiten Nebenstromkanals lediglich ein Ventilelement, nämlich das zentrale Ventilelement, überwunden werden muß.

Dies hat den Nachteil, daß eine feine und komfortable Einstellung der Dämpfungscharakteristik schwierig ist, da die Dämpfungscharakteristik des einen Nebenstromkanals von der Dämfpungscharakteristik des anderen Nebenstromkanals abhängig ist. Des weiteren sind auch die Einstellmöglichkeiten der Ventileinrichtung insgesamt begrenzt. Insbesondere ein Ausgleich feiner Unebenheiten z.B. auf einer Fahrbahn, also eine besonders weiche Dämpfungscharakteristik ist wegen der teilweise gemeinsamen Anordnung der Ventilelemente innerhalb der Nebenstromkanäle nicht möglich, da das Dämpfungsmedium mindestens in einem Nebenstromkanal stets zwei Ventilelemente überwinden muß, um von einer Kammer in die andere oder umgekehrt zu gelangen.

Aufgabe der Erfindung ist es daher, einen kompakten Stoßdämpfer vorzuschlagen, der eine verbesserte und optimiert einstellbare Dämpfungscharakteristik aufweist und damit insbesondere den Fahrkomfort z.B. in einem Kfz erhöht.

Diese Aufgabe wird durch einen Stoßdämpfer der eingangs genannten Art dadurch gelöst, daß jedem Nebenstromkanal ein separates Ventilelement zugeordnet ist und daß zusätzlich zu den Nebenstromkanälen ein weiterer Nebenstromkanal innerhalb der Ventileinrichtung gebildet ist, der derart ausgebildet ist, daß er in geöffneter Stellung der Steuerschieber der anderen beiden Nebenstromkanäle geöffnet ist. Durch diese erfindungsgemäße Ausbildung wird der Fahrkomfort durch eine verbesserte Einstellmöglichkeit der Dämpfungscharakteristik erhöht, da das Dämpfungsmedium beim Strömen durch die Nebenstromkanäle jeweils nur ein einzelnes Ventilelement überwinden muß, die völlig unabhängig voneinander einstellbar sind. Dadurch, daß jedem Nebenstromkanal genau ein Ventilelement zugeordnet ist, sich die Ventilelemente also jeweils innerhalb des zugeordneten Nebenstromkanals befinden, ist die Einstellmöglichkeit präzisiert. Mit anderen Worten wird durch den Verzicht eines zentralen Ventilelementes für beide Nebenstromkanäle die Einstellbarkeit der Dämfpungscharakteristik des Stoßdämpfers verbessert. Durch den weiteren zusätzlichen Nebenstromkanal innerhalb der Ventileinrichtung ist ein weiterer sogenannter Bypass gebildet, wobei die Bypässe jeweils eine völlig eigenständige Dämpfungscharakteristik aufweisen. Durch den dritten Nebenstromkanal erhöht sich gleichzeitig auch das Spektrum der einstellbaren Dämpfungscharakteristika, so daß der Komfort noch weiter erhöht wird. Mit dem zusätzlichen Nebenstromkanal sind insgesamt vier unterschiedliche Dämpfungscharakteristika einstellbar. Der dritte Nebenstromkanal innerhalb der Ventileinrichtung gewährleistet eine Erhöhung des Komforts, ohne die Baugröße der Ventileinrichtung zu verändern, so daß die Stoßdämpfer bei gleicher Baugröße über mehr Einstellmöglichkeiten verfügen. Die Ausbildung des dritten Nebenstromkanals derart, dass er in geöffneter Stellung der Steuerschieber der anderen beiden Nebenstromkanäle geöffnet ist, bewirkt die Erhöhung der Anzahl der Einstellmöglichkeiten ohne eine Vergrößerung der Bauform der Ventileinrichtung und damit des Stoßdämpfers, da auf zusätzliche Steuerschieber zum Öffnen und Schließen des zusätzlichen Nebenstromkanals verzichtet werden kann.

Vorteilhafterweise ist der zusätzliche Nebenstromkanal frei von Ventilelementen. Mit dieser Ausführungsform wird eine besonders weiche und damit komfortable Dämpfungscharakteristik erreicht, so daß der Stoßdämpfer selbst auf kleinste Unebenheiten reagieren kann.

Weitere bevorzugte Merkmale und Ausführungsformen ergeben sich aus den Unteransprüchen sowie der Beschreibung. Eine besonders bevorzugte Ausführungsform eines Stoßdämpfers wird anhand der beigefügten Zeichnung näher erläutert. In der Zeichnung zeigt:
- Fig. 1: einen Stoßdämpfer mit einem offenen ersten Nebenstromkanal und einem geschlossenen zweiten Nebenstromkanal im Schnitt,
- Fig. 2: den Stoßdämpfer gemäß Figur 1 mit Strömung des Dämpfungsmediums durch den Hauptstromkanal, also mit geschlossenen Steuerschiebern der Nebenstromkanäle, bei Zugstufenbetätigung,
- Fig. 3: den Stoßdämpfer gemäß Figur 1 mit Strömung des Dämpfungsmediums durch den ersten Nebenstromkanal, also mit geschlossenem Steuerschieber des zweiten Nebenstromkanals, bei Zugstufenbetätigung,
- Fig. 4: den Stoßdämpfer gemäß Figur 1 mit Strömung des Dämpfungsmediums durch den zweiten Nebenstromkanal bei Zugstufenbetätigung,
- Fig. 5: den Stoßdämpfer gemäß Figur 1 mit Strömung des Dämpfungsmediums durch den dritten Nebenstromkanal, also mit geöffneten Steuerschiebern des ersten und zweiten Nebenstromkanals, bei Zugstufenbetätigung, und
- Fig. 6: den Stoßdämpfer gemäß Figur 3 in zwei Wirkstellungen, nämlich bei Zugstufen-und Druckstufenbetätigung.

Die Erfindung betrifft Stoßdämpfer mit veränderbarer Dämpfungscharakteristik, die insbesondere im Kfz-Bereich zum Einsatz kommen.

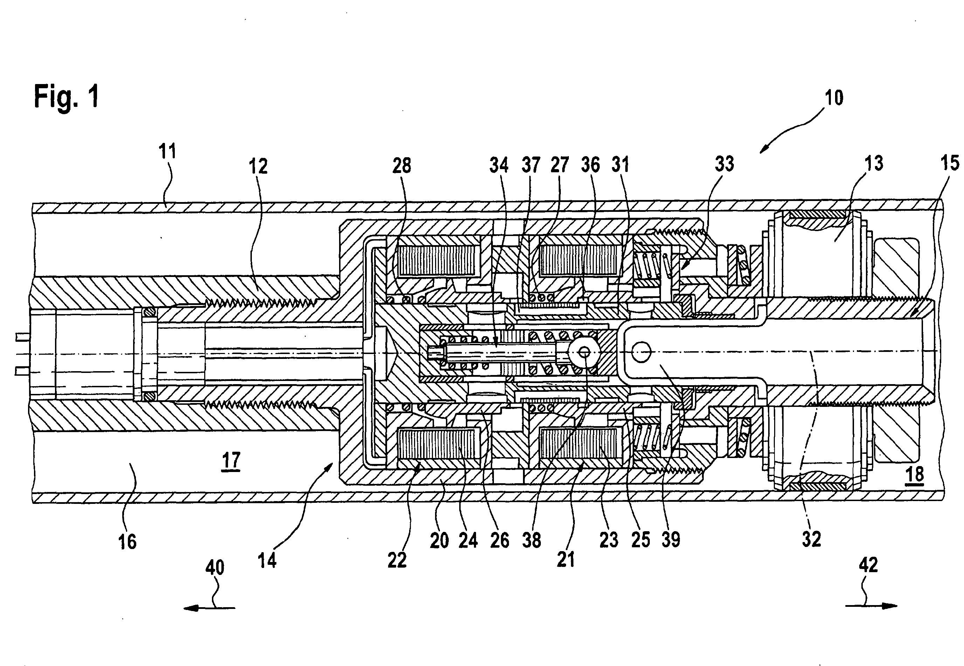

In Figur 1 ist ein Teil eines Stoßdämpfers 10 dargestellt, der im wesentlichen ein Stoßdämpferrohr 11, eine Kolbenstange 12, einen Kolben 13 sowie eine Ventileinrichtung 14 umfaßt. Die Kolbenstange 12 taucht in bekannter Form abgedichtet in das Stoßdämpferrohr 11, derart, daß innerhalb des Stoßdämpferrohrs 11 befindliches Dämpfungsmedium, z.B. Öl, Gas oder dergleichen, nicht aus dem Stoßdämpferrohr 11 austreten kann. Im Bereich eines freien Endes 15 der Kolbenstange 12 ist an dieser der Kolben 13 angeordnet, der gegen das Stoßdämpferrohr 11 in üblicher Art und Weise, z.B. durch eine Ringdichtung, abgedichtet ist. Der Kolben 13 teilt den Innenraum 16 des Stoßdämpfers 10 in zwei Kammern 17, 18. Die beiden Kammern 17, 18 sind durch einen später detaillierter beschriebenen Hauptstromkanal 19 miteinander verbunden. Der Hauptstromkanal 19 kann auch aus mehreren Einzelkanälen gebildet sein. Dem Hauptstromkanal 19 sind zweckmäßigerweise im Bereich des Kolbens 13 (nicht dargestellte) Ventilelemente, z.B. Federscheiben, zugeordnet, die mit ihrer Strömungscharakteristik die Dämpfungscharakteristik des Hauptstromkanals 19 bestimmen. Mit Strömungscharakteristik ist die Kraft/der Widerstand bezeichnet, bei dem die Ventilelemente gegen eine Federkraft oder dergleichen öffnen. Bei Ventilelementen mit harter Strömungscharakteristik ist eine große Kraft bzw. ein großer Druck erforderlich, um sie zu öffnen. Ventilelemente mit weicher Strömungscharakteristik öffnen bereits bei geringem Druck. Die Ventileinrichtung 14 ist ebenfalls auf der Kolbenstange 12 lösbar befestigt und dient zur Steuerung bzw. Einstellung der Dämpfungscharakteristik.

Die Ventileinrichtung 14 weist ein Ventilgehäuse 20 auf, in dem mehrere Steuerungselemente angeordnet sind. Die Steuerungselemente sind in üblicher Weise aus Elektromagneten 21, 22 mit entsprechenden Erregerspulen 23, 24 gebildet. Andere bekannte Steuerungselemente sind ebenfalls einsetzbar. Mit den Elektromagneten 21, 22 bzw. den Erregerspulen 23, 24 sind jeweils Steuerschieber 25, 26 in Wirkverbindung, die gegen die Wirkung von Federelementen 27, 28 aus einer Schließstellung von Nebenstromkanälen 29, 30 in eine geöffnete Stellung bringbar sind. Hierzu sind die ringförmigen Steuerschieber 25, 26 bewegbar auf einem Grundkörper 31 angeordnet, und zwar vorzugsweise in Längsrichtung der Kolbenstange 12 parallel zur Mittelachse 32 derselben.

Jedem Nebenstromkanal 29, 30 ist ein separates und vom jeweils anderen Nebenstromkanal 29, 30 völlig unabhängiges Ventilelement 33, 34 zugeordnet. Jedes Ventilelement 33, 34 verfügt in der gezeigten Ausführungsform über einen einzelnen Ventilkörper. Es ist jedoch nicht ausgeschlossen, daß ein Ventilelement oder beide Ventilelemente 33, 34 jeweils über mehrere, vorzugsweise in Reihe geschaltete Ventilkörper verfügen. Die Ventilelemente 33, 34, die jeweils einen wechselseitig federbelasteten, druckbeaufschlagten Ventilkörper aufweisen, sind als Überdruckventile verstellbar ausgebildet und unterscheiden sich in ihrer jeweiligen Strömungscharakteristik. Beide Strömungscharakteristika unterscheiden sich von der Strömungscharakteristik des Hauptstromkanals 19, so daß durch diese Ausbildung insgesamt drei unterschiedliche Dämpfungscharakteristika gebildet sind.

Zur Bildung mindestens eines weiteren Nebenstromkanals 35, der mindestens eine weitere, vierte Dämpfungscharakteristik und damit eine weitere Komforterhöhung gegenüber bekannten Stoßdämpfern gewährleistet, ist einer der Steuerschieber, vorzugsweise der Steuerschieber 25, mit einer ringförmig umlaufenden Ausnehmung 36 versehen, die in Wirkverbindung mit einer kanalartigen Ausnehmung 37 im Grundkörper 31 bringbar ist. Die Ausnehmungen 36 und 37 können dann kommunizieren, wenn die Steuerschieber 25, 26 der Nebenstromkanäle 29, 30 in ihrer jeweils geöffneten Position stehen. Als Verbindung von der Kammer 17 in die Kammer 18 ist eine Durchgangsbohrung 38 ausgebildet, die sich radial, nämlich senkrecht zur Mittelachse 32, von der Ausnehmung 36 nach innen in einen hohlen Abschnitt 39 der Kolbenstange 12 erstreckt, wobei der hohle Abschnitt 39 in die Kammer 18 mündet.

Dieser dritte Nebenstromkanal 35 ist in der gezeigten Ausführungsform frei von Ventilelementen, so daß das Dämpfungsmedium in dem entsprechend geschalteten und weiter unten detaillierter beschriebenen Zustand ungehindert von der Kammer 17 in die Kammer 18 bzw. umgekehrt strömen kann. In einer alternativen (nicht dargestellten) Ausführungsform kann innerhalb des dritten Nebenstromkanals 35 ein weiteres Ventilelement angeordnet sein, wobei das weitere Ventilelement eine Strömungscharakteristik aufweist, die von den Strömungscharakteristika der Ventilelemente 33, 34 der Nebenstromkanäle 29, 30 sowie der Strömungscharakteristik des Ventilelementes des Hauptstromkanals 19 abweicht.

Der Stoßdämpfer 10 bzw. die Ventileinrichtung 14 ist an eine zentrale (nicht dargestellte) Steuerung angeschlossen, mittels der die jeweils gewünschte Dämpfungscharakteristik einstellbar und steuerbar ist. Insgesamt sind vier unterschiedliche Dämpfungscharakteristika einstellbar, wobei die Dämpfungshärte von der Dämpfungscharakteristik des Hauptstromkanals 19 bis zur Dämpfungscharakteristik des dritten Nebenstromkanals 35 abnimmt. Mit anderen Worten ist die Dämpfung beim Strom des Dämpfungsmediums durch den Hauptstromkanal 19 am härtesten und beim Strom durch den Nebenstromkanal 35 am weichsten.

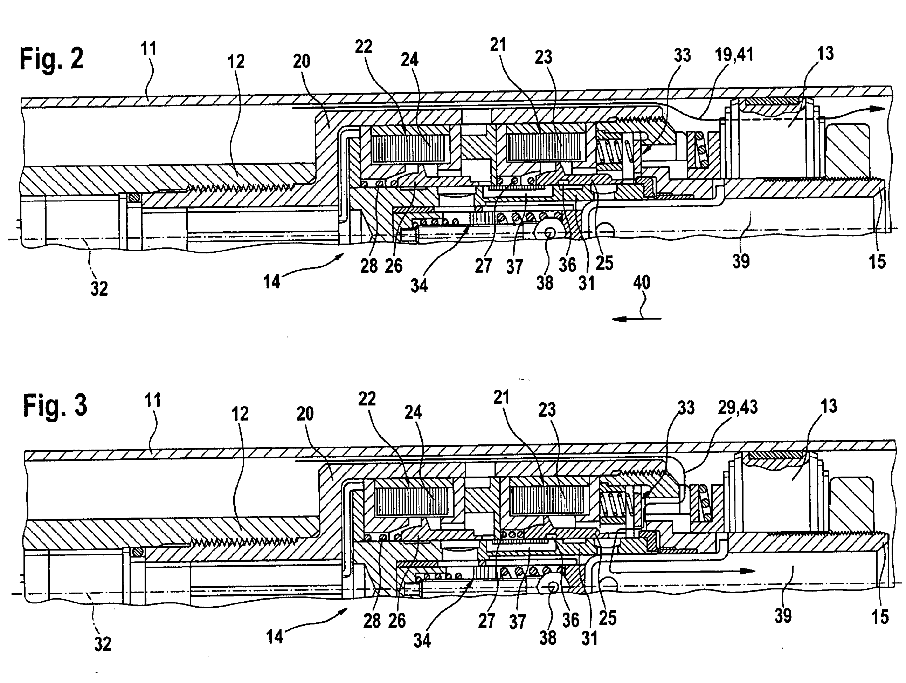

Bei herkömmlichen Stoßdämpfern ohne die beschriebene Ventileinrichtung 14 muß das Dämpfungsmedium zwangsläufig bei Zugstufenbetätigung oder Druckstufenbetätigung durch den Hauptstromkanal 19 von der einen Kammer 17 in die andere Kammer 18 bzw. umgekehrt strömen. Um jedoch die Dämpfungscharakteristik beeinflussen zu können, sind die Nebenstromkanäle 29, 30 und 35 vorgesehen, die auch als Bypässe bezeichnet werden. Das Dämpfungsmedium wählt stets den Weg des geringsten Widerstandes, um von der Kammer 17 in die Kammer 18 (bei Zugstufenbetätigung) oder von der Kammer 18 in die Kammer 17 (bei Druckstufenbetätigung) zu gelangen. Zum besseren Verständnis der Erfindung werden die einzelnen Zustände anhand der Figuren 2 bis 5 näher erläutert, wobei die Figuren 2 bis 5 jeweils nur ein Hälfte eines Teils des Stoßdämpfers 10 zeigen. Da der Stoßdämpfer 10 jedoch rotationssymmetrisch zur Mittelachse 32 aufgebaut ist, kann auch eine vollständige Darstellung verzichtet werden. Im einzelnen:

In der Figur 2 ist die Ventileinrichtung 14 derart geschaltet, daß beide Steuerschieber 25, 26 in geschlossener Stellung sind und damit die Nebenstromkanäle 29, 30, 35 verschließen. Das Dämpfungsmedium ist damit gezwungen, durch den Kolben 13, beispielsweise durch federnde Ventilscheiben oder dergleichen, über den Hauptstromkanal 19 von der Kammer 17 in die Kammer 18 zu strömen. In der Ausführungsform gemäß Figur 2 ist die Zugstufenbetätigung dargestellt. Das bedeutet, daß der Stoßdämpfer 10 bei Zugbelastung (Bewegung der Kolbenstange 12 in Richtung des Pfeils 40) auseinandergezogen wird. Man spricht dann auch von Ausfedern. Die federnden Ventilscheiben sind derart ausgebildet, daß ihre Strömungscharakteristik abweichend, zweckmäßigerweise härter, sind als die der Ventilelemente 33, 34. Da die Steuerschieber 25, 26 jedoch in Schließstellung sind, strömt das Dämpfungsmedium dem Pfeil 41 folgend durch den Hauptstromkanal 19. In der in Figur 2 dargestellten Schaltstellung weist der Stoßdämpfer 10 seine härteste Dämpfung auf. Bei einer Druckstufenbetätigung, also einer Druckbelastung des Stoßdämpfers 10 (Bewegung der Kolbenstange 12 in Richtung des Pfeils 42), dem sogenannten Einfedern, strömt das Dämpfungsmedium auf gleichem Wege entgegen der Richtung des Pfeils 41.

Zur Veränderung der Dämpfung, vorzugsweise dem "Weichmachen" der Dämpfung ist mindestens ein Teil des Dämpfungsmediums, vorzugsweise jedoch das gesamte Dämpfungsmedium, durch einen "weicheren" Nebenstromkanal zu leiten. Hierzu ist bei der Schaltstellung gemäß Figur 3 der erste Nebenstromkanal 29 geöffnet. Das bedeutet, daß der Steuerschieber 25 durch Erregung mittels der Erregerspule 23 gegen die Kraft/Spannung des Federelementes 27 in einer geöffneten Position steht. Der Steuerschieber 26 ist weiterhin in seiner Schließposition. Bei einer Zugbewegung des Stoßdämpfers 10 (in Richtung des Pfeils 40), strömt das Dämpfungsmedium dem Pfeil 43 folgend durch den ersten Nebenstromkanal 29. Dabei bewirkt das Dämpfungsmedium, daß sich das Ventilelement 33, das weicher eingestellt ist, also eine weichere Strömungscharakteristik aufweist als die Ventilscheiben des Hauptstromkanals 19, öffnet. Bei einer Druckbewegung des Stoßdämpfers 10 erfolgt der Strom des Dämpfungsmediums in entgegengesetzter Richtung. Durch Entregung der Erregerspule 23 ist der Steuerschieber 25 mittels der Kraft/Spannung des Federelementes 27 in seine Schließposition bringbar.

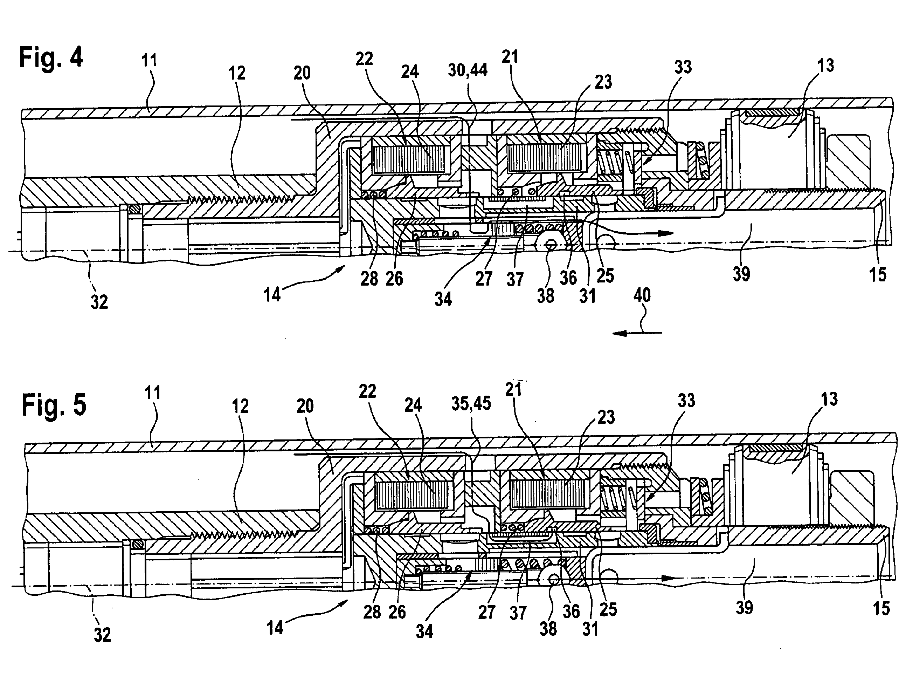

Die Figur 4 zeigt den Stoßdämpfer 10 mit geöffnetem Nebenstromkanal 30. Hierzu ist der Steuerschieber 26 durch Erregung der Erregerspule 24 gegen die Kraft/Spannung des Federelementes 28 in seiner geöffneten Position. Der Steuerschieber 25 ist in seiner Schließposition, wobei die Stellung des Steuerschiebers 25 in geöffneter Position ebenso möglich ist, vorausgesetzt, die Strömungscharakteristik des Ventilelementes 34 ist weicher als die Strömungscharakteristik des Ventilelementes 33. Der Weg des geringsten Widerstandes für das Dämpfungsmedium führt daher zwangsläufig durch den Nebenstromkanal 30, so daß das Dämpfungsmedium bei der Zugstufenbetätigung dem Pfeil 44 folgt. Bei der Dmckstufenbetätigung strömt das Dämpfungsmedium entgegengesetzt der Richtung des Pfeils 44.

Bei der Schaltstellung gemäß Figur 5 sind beide Steuerschieber 25, 26 in ihrer geöffneten Position, so daß in beiden Nebenstromkanälen 29, 30 als Hindernis für das Dämpfungsmedium lediglich die Ventilelemente 33, 34 angeordnet sind. Da der durch die erwähnte Stellung der Steuerschieber 25, 26 geöffnete dritte Nebenstromkanal 35 jedoch frei von Ventilelementen ist, strömt das Dämpfungsmedium zur weichen Dämpfung dem Pfeil 45 folgend durch den dritten Nebenstromkanal 35. Für den Fall, daß innerhalb des Nebenstromkanals 35 ebenfalls ein Ventilelement angeordnet ist, weist die Strömungscharakteristik des Ventilelementes einen gegenüber den Ventilelementen des Hauptstromkanals 19 sowie der Nebenstromkanäle 29, 30 weicheren Verlauf auf. Mit anderen Worten ist zur Überwindung des Ventilelementes innerhalb des Nebenstromkanals 35 dann ein gegenüber den Ventilelementen 33, 34 geringerer Druck erforderlich, so daß das Dämpfungsmedium durch den dritten Nebenstromkanal 35 fließen würde. Das Dämpfungsmedium strömt durch den Nebenstromkanal 35 und die Durchgangsbohrung 38 von der Kammer 17 in die Kammer 18 bzw. umgekehrt.

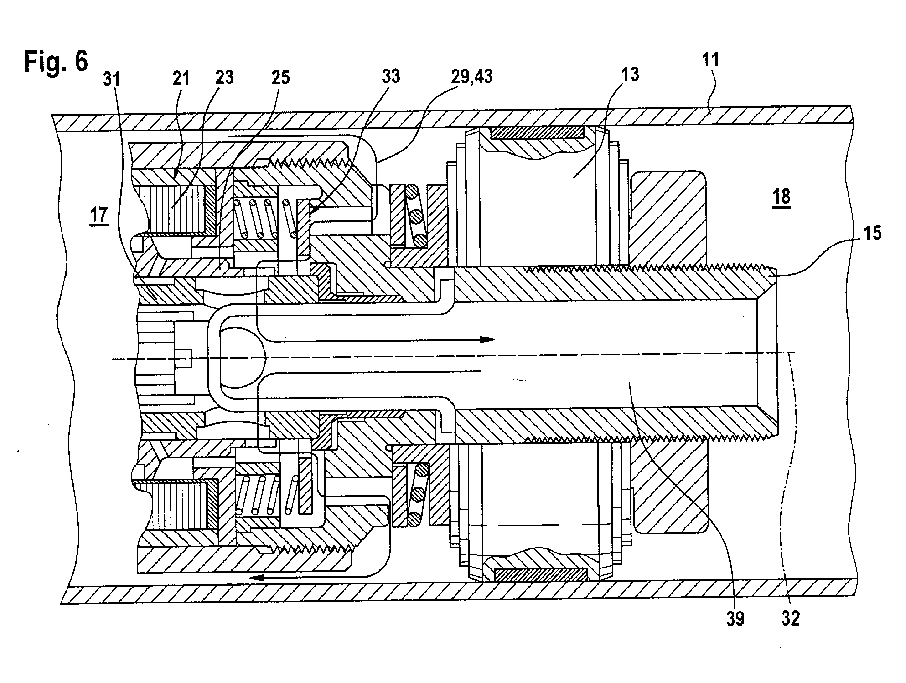

Zur Veranschaulichung des Funktionsprinzips des erfindungsgemäßen Stoßdämpfers 10 ist in Figur 6 eine Darstellung unterschiedlicher Wirkstellungen, nämlich der Zugstufenbetätigung einerseits und der Druckstufenbetätigung anderseits gezeigt, aus der die Strömung des Dämpfungsmediums bei geöffnetem Nebenstromkanal 29 hervorgeht.

Die im Detail beschriebene Ventileinrichtung 14 ist universell bei unterschiedlichen Typen von Schwingungsdämpfern, z.B. Einrohr- oder Zweirohrstoßdämpfern einsetzbar und insbesondere auch mit einfachen Mitteln bei bestehenden Stoßdämpfern nachrüstbar. Das Prinzip des dritten Nebenstromkanals 35 läßt sich auch in Ventileinrichtungen 14 integrieren, die mehr als zwei Steuerschieber 25, 26 aufweisen.

## Patentansprüche

1. Stoßdämpfer mit veränderbarer Dämpfungscharakteristik, insbesondere für Kraftfahrzeuge, im wesentlichen umfassend ein mit einem Dämpfungsmedium gefülltes Stoßdämpferrohr (11), eine Kolbenstange (12), die abgedichtet in das Stoßdämpferrohr (11) eintaucht, einen Kolben (13), der an einem freien Ende (15) der Kolbenstange (12) an dieser derart angeordnet ist, daß der Kolben (13) gegen das Stoßdämpferrohr (11) abgedichtet ist und den Raum innerhalb des Stoßdämpferrohrs (11) in zwei Kammern (17, 18) teilt, wobei die Kammern (17, 18) durch einen Hauptstromkanal (19) sowie mehrere Nebenstromkanäle (29, 30) miteinander verbunden sind, und eine Ventileinrichtung (14) zum Öffnen und Schließen der Nebenstromkanäle (29, 30), wobei die Ventileinrichtung (14) hierzu mehrere auf einem Grundkörper (31) verschiebbare und separat steuerbare Steuerschieber (25, 26) sowie mehrere Ventilelemente (33, 34) mit unterschiedlichen Strömungscharakteristika aufweist, wobei jedem Nebenstromkanal (29, 30) ein separates Ventilelement (33, 34) zugeordnet ist und **dadurch gekennzeichnet, daß** zusätzlich zu den Nebenstromkanälen (29, 30) ein weiterer Nebenstromkanal (35) innerhalb der Ventileinrichtung (14) gebildet ist, der derart ausgebildet ist, daß er in geöffneter Stellung der Steuerschieber (25, 26) der anderen beiden Nebenstromkanäle (29, 30) geöffnet ist.

2. Stoßdämpfer nach Anspruch 1, **dadurch gekennzeichnet, daß** die Ventilelemente (33, 34) derart in den Nebenstromkanälen (29, 30) angeordnet sind, daß das Dämpfungsmedium beim Strömen durch einen der Nebenstromkanäle (29, 30) von der Kammer (17) in die Kammer (18) bzw. umgekehrt lediglich durch eines der Ventilelemente (33 bzw. 34) strömt.

3. Stoßdämpfer nach Anspruch 1 oder 2, **dadurch gekennzeichnet, daß** jedes Ventilelement (33, 34) einen einzelnen Ventilkörper umfaßt.

4. Stoßdämpfer nach einem der Ansprüche 1 bis 3, **dadurch gekennzeichnet, daß** die Ventilelemente (33, 34) bzw. Ventilkörper als einstellbare Überdruckventile ausgebildet sind.

5. Stoßdämpfer nach einem der Ansprüche 1 bis 4, **dadurch gekennzeichnet, daß** innerhalb des Hauptstromkanals (19) mindestens ein Ventilelement angeordnet ist.

6. Stoßdämpfer nach Anspruch 5, **dadurch gekennzeichnet, daß** das Ventilelement innerhalb des Hauptstromkanals (19) und die Ventilelemente (33, 34) innerhalb der Nebenstromkanäle (29, 30) jeweils eine unterschiedliche Strömungscharakteristik aufweisen.

7. Stoßdämpfer nach Anspruch 4 oder 5, **dadurch gekennzeichnet, daß** einer der Steuerschieber (25, 26) der Nebenstromkanäle (29, 30) zur Bildung des dritten Nebenstromkanals (35) innenseitig eine Ausnehmung (36) aufweist, die in Wirkverbindung mit einer Ausnehmung (37) des Grundkörpers (31) bringbar ist.

8. Stoßdämpfer nach Anspruch 7, **dadurch gekennzeichnet, daß** die ringförmig umlaufende Ausnehmung (36) über eine Durchgangsbohrung (38) mit der Kammer (18) in Verbindung steht.

9. Stoßdämpfer nach Anspruch 1, **dadurch gekennzeichnet, daß** der dritte Nebenstromkanal (35) frei von Ventilelementen ist.

10. Stoßdämpfer nach Anspruch 1, **dadurch gekennzeichnet, daß** innerhalb des dritten Nebenstromkanals (35) ein weiteres Ventilelement angeordnet ist, wobei die Strömungscharakteristik des Ventilelementes von denen der Ventilelemente (33, 34) der Nebenstromkanäle (29, 30) abweicht.

## Claims

1. Shock absorber having variable damping characteristic, in particular for motor vehicles, substantially comprising a shock absorber cylinder (11) filled with a damping medium, a piston rod (12) which is sealed off and dips into the shock absorber cylinder (11), a piston (13) which is arranged on a free end (15) of the piston rod (12) in such a way that the piston (13) is sealed off with respect to the shock absorber cylinder (11) and divides the space inside the shock absorber cylinder (11) into two chambers (17, 18), whereby the chambers (17, 18) are joined to one another by a main flow channel (19) and a plurality of secondary flow channels (29, 30), and a valve device (14) for opening and closing the secondary flow channels (29, 30), whereby for this purpose the valve device (14) possesses a plurality of separately controllable spool valves (25, 26) displaceable on a base structure (31) and a plurality of valve members (33, 34) having different flow characteristics, wherein a separate valve member (33, 34) is assigned to each secondary flow channel (29, 30) and **characterized in that** in addition to the secondary flow channels (29, 30) another secondary flow channel (35) is formed inside the valve device (14), which is constructed in such a way that in the open position of the spool valves (25, 26) of the other two secondary flow channels (29, 30) it is open.

2. Shock absorber according to claim 1, **characterized in that** the valve members (33, 34) are disposed in the secondary flow channels (29, 30) in such a way that on flowing through one of the secondary flow channels (29, 30) from the chamber (17) into the chamber (18) and vice versa the damping medium flows only through one of the valve members (33 or 34).

3. Shock absorber according to claim 1 or 2, **characterized in that** each valve member (33, 34) comprises a single valve body.

4. Shock absorber according to any one of claims 1 to 3, **characterized in that** the valve members (33, 34) or valve bodies are constructed in the form of excess-pressure valves.

5. Shock absorber according to any one of claims 1 to 4, **characterized in that** at least one valve member is arranged inside the main flow channel (19).

6. Shock absorber according to claim 5, **characterized in that** the valve member inside the main flow channel (19) and the valve members (33, 34) inside the secondary flow channels (29, 30) each have a different flow characteristic.

7. Shock absorber according to claim 4 or 5, **characterized in that** to form the third secondary flow channel (35) one of the spool valves (25, 26) of the secondary flow channels (29, 30) has a recess (36) on the inside which can be brought into functional connection with a recess (37) in the base structure (31).

8. Shock absorber according to claim 7, **characterized in that** the all-round annular recess (36) is connected to the chamber (18) via a through-hole (38).

9. Shock absorber according to claim 1, **characterized in that** the third secondary flow channel (35) is free of valve members.

10. Shock absorber according to claim 1, **characterized in that** another valve member is arranged inside the third secondary flow channel (35), whereby the flow characteristic of the valve member differs from those of the valve members (33, 34) of the secondary flow channels (29, 30).

## Revendications

1. Amortisseur à caractéristique d'amortissement variable, en particulier pour des véhicules automobiles, comprenant essentiellement un tube d'amortisseur (11) rempli d'un fluide d'amortissement, une tige de piston (12) qui plonge de façon étanche dans le tube d'amortisseur (11), un piston (13) qui, à une extrémité libre (15) de la tige de piston (12), est positionné sur cette dernière de telle manière que le piston (13) soit étanchéifié vis-à-vis du tube d'amortisseur (11) et partage l'espace intérieur du tube d'amortisseur (11) en deux chambres (17, 18), les chambres (17, 18) étant reliées l'une à l'autre par un canal de courant principal (19) ainsi que plusieurs canaux de courant auxiliaire (29, 30), et un dispositif de soupapes (14) pour ouvrir et fermer les canaux de courant auxiliaire (29, 30), le dispositif de soupapes (14) présentant, à cette fin, plusieurs tiroirs de distribution (25, 26), montés à coulissement sur un corps de base (31) et pouvant être manoeuvrés séparément, ainsi que plusieurs soupapes élémentaires (33, 34) ayant des caractéristiques d'écoulement différentes, une soupape élémentaire (33, 34) séparée étant associée à chaque canal de courant auxiliaire (29, 30), **caractérisé en ce qu'**en plus des canaux de courant auxiliaire (29, 30), il est formé, à l'intérieur du dispositif de soupapes (14), un canal supplémentaire de courant auxiliaire (35) qui est aménagé de telle manière que, dans la position ouverte des tiroirs de distribution (25, 26) des deux autres canaux de courant auxiliaire (29, 30), il soit ouvert.

2. Amortisseur selon la revendication 1, **caractérisé en ce que** les soupapes élémentaires (33, 34) sont, dans les canaux de courant auxiliaire (29, 30), disposées de telle manière que le fluide d'amortissement, lors de l'écoulement par l'un des canaux de courant auxiliaire (29, 3à), s'écoule uniquement à travers l'une des soupapes élémentaires (33 ou 34), de la chambre (17) dans la chambre (18) ou inversement.

3. Amortisseur selon la revendication 1 ou 2, **caractérisé en ce que** chaque soupape élémentaire (33, 34) comprend un obturateur de soupape individuel.

4. Amortisseur selon l'une des revendications 1 à 3, **caractérisé en ce que** les soupapes élémentaires (33, 34) ou les obturateurs de soupape sont conçus sous forme de soupapes de surpression réglables.

5. Amortisseur selon l'une des revendications 1 à 4, **caractérisé en ce qu'**à l'intérieur du canal de courant principal (19) est disposée au moins une soupape élémentaire.

6. Amortisseur selon la revendication 5, **caractérisé en ce que** la soupape élémentaire située à l'intérieur du canal de courant principal (19) et les soupapes élémentaires (33, 34) situées à l'intérieur des canaux de courant auxiliaire (29, 30), présentent respectivement des caractéristiques d'écoulement différentes.

7. Amortisseur selon la revendication 4 ou 5, **caractérisé en ce que** l'un des tiroirs de distribution (25, 26) des canaux de courant auxiliaire (29, 30) présente intérieurement, en vue de la formation du troisième canal de courant auxiliaire (35), un évidement (36), qui peut être amené en relation de coopération avec un évidement (37) du corps de base (31).

8. Amortisseur selon la revendication 7, **caractérisé en ce que** l'évidement (36) périphérique sous une forme annulaire, communique avec la chambre (18) au travers d'une forure de passage (38).

9. Amortisseur selon la revendication 1, **caractérisé en ce que** le troisième canal de courant auxiliaire (35) est exempt de soupapes élémentaires.

10. Amortisseur selon la revendication 1, **caractérisé en ce qu'**une soupape élémentaire supplémentaire est disposée à l'intérieur du troisième canal de courant auxiliaire, la caractéristique d'écoulement de la soupape élémentaire différant de celles des soupapes élémentaires (33, 34) des canaux de courant auxiliaire (29, 30).
